# EUROPEAN PATENT SPECIFICATION

(11) **EP 3 808 512 B1**
(45) Date of publication and mention of the grant of the patent: **25.09.2024**
(21) Application number: 19818814.6
(22) Date of filing: 06.06.2019
(51) Int. Cl.: G05D 1/00, B25J 9/16, G01S 5/00, G05B 19/042

(54) **ROBOT LOCALIZING METHOD, ROBOT, AND STORAGE MEDIUM**
ROBOTERLOKALISIERUNGSVERFAHREN, ROBOTER UND SPEICHERMEDIUM
PROCÉDÉ DE LOCALISATION DE ROBOT, ROBOT ET SUPPORT D'INFORMATIONS

(30) Priority: 15.06.2018 CN 201810624053
(43) Date of publication of application: 21.04.2021
(73) Proprietor: Ecovacs Robotics Co., Ltd., Wuzhong District Suzhou, Jiangsu 215168 (CN)
(72) Inventor: CEN, Bin, Suzhou, Jiangsu 215168 (CN)
(74) Representative: Renaudo, Adrien Hanouar
(86) International application number: PCT/CN2019/090317
(87) International publication number: WO 2019/237990

(56) References cited:
- CN-A- 103 353 758
- CN-A- 103 576 686
- CN-A- 104 596 533
- KR-A- 20110 085 500
- KR-A- 20120 056 536
- US-B2- 8 594 860
- US-B2- 9 020 637
- US-B2- 9 630 319
- RIAZUELO L ET AL: "C2TAM: A Cloud framework for cooperative tracking and mapping", ROBOTICS AND AUTONOMOUS SYSTEMS, ELSEVIER BV, AMSTERDAM, NL, vol. 62, no. 4, 4 December 2013 (2013-12-04), pages 401 - 413, XP028662701, ISSN: 0921-8890, DOI: 10.1016/J.ROBOT.2013.11.007

## Description

### FIELD

The present disclosure relates to the field of artificial intelligence technology, in particular to a method for localizing a robot, a robot, and a storage medium.

### BACKGROUND

With the development of artificial intelligence technology, robots have gradually entered people's daily lives, bringing great convenience to people's lives. No matter what type of robot, as long as it moves autonomously, it needs to be navigated and localized in its environment.

In the prior arts, a robot can realize autonomous localization and navigation with the help of SLAM technology (Simultaneous Localization and Mapping). However, during the SLAM process, the robot may sometimes be hijacked, for example, the robot is moved, suspended in the air, or dragged with a large area. When the robot returns to the ground, an uncontrollable drift error will appear in localization, and the robot needs to be re-localized.

The existed localizing technology generally constructs a temporary map based on the information of surrounding environment collected by the robot, and compares the temporary map with the existing environment map to determine a pose of the robot in the existing environment map. However, in some cases, the existing localizing technologies cannot accurately localize the pose of the robot. US 9630319 B2 discloses localization and mapping using physical features, where the method includes maneuvering a robot in (i) a following mode in which the robot is controlled to travel along a path segment adjacent an obstacle, while recording data indicative of the path segment, and (ii) in a coverage mode in which the robot is controlled to traverse an area (see abstract of US 9630319 B2). US 9020637 B2 discloses simultaneous localization and mapping for a mobile robot, where a the method includes receiving sparse sensor data from a sensor system of the robot, synchronizing the received sensor data with a change in robot pose, accumulating the synchronized sensor data over time, and determining a robot localization quality (see abstract of US 9020637 B2).

### SUMMARY

Various aspects of the present disclosure provide a method for localizing a robot, a robot, and a storage medium, which are used to realize accurate localizing of a pose of the robot and improve the accuracy of localizing. The invention is defined by the appended claims.

An embodiment of the present disclosure provides a method for localizing a robot, including:
acquiring, by the robot, environment information of a current position;
comparing, by the robot, the environment information of the current position with the environment map stored in the robot to obtain a comparison result;
when the comparison result does not meet a set comparison requirement, moving the robot from a current position to a second position during a localizing process;
acquiring environment information during the movement; and
comparing the environment information during the movement with an environment map stored in the robot to identify a pose of the robot in the stored environment map.

An embodiment of the present disclosure further provides a robot, including: a basic machine, where the basic machine is provided with one or more sensors, one or more processors, and one or more memories storing computer instructions;
the one or more memories are configured to store computer instructions and an environment map;
the one or more processors are configured to execute the computer instructions for: acquiring environment information of a current position;
comparing the environment information of the current position with the environment map stored in the robot to obtain a comparison result;
when the comparison result does not meet a set comparison requirement, controlling the robot to move from a current position to a second position during a localizing process;
acquiring environment information during the movement by the one or more sensors; and
comparing the environment information during the movement with the environment map stored in the one or more memories to identify a pose of the robot in the stored environment map.

An embodiment of the present disclosure further provides a computer-readable storage medium storing computer instructions, when the computer instructions are executed by one or more processors, causing the one or more processors to perform the following operations:
acquiring environment information of a current position;
comparing the environment information of the current position with the environment map stored in the robot to obtain a comparison result;
when the comparison result does not meet a set comparison requirement, controlling a robot to move from a current position to a second position during a localizing process; acquiring environment information during the movement; and
comparing the environment information during the movement with a stored environment map to identify a pose of the robot in the stored environment map.

In the embodiments of the present disclosure, the robot may move from the current position to a new position during the localizing process, more environment information may be acquired during the movement, and then the acquired environment information is compared with the environment map stored in the robot, which facilitates successfully localizing the pose of the robot in the stored environment map. In addition, during the movement and localization of the robot, environment information at different positions is generally different, so that similar regional environments may be distinguished, and the problem that an accurate pose cannot be obtained because there may be a plurality of similar regional environments when the robot stays at the original position for localizing may be overcome.

### BRIEF DESCRIPTION OF THE DRAWINGS

The drawings described herein are used to provide a further understanding of the present application and constitute a part of the present application. The example embodiments of the present application and the descriptions thereof are used to explain the present application, and do not constitute an improper limitation on the present application. In the drawings:
FIG. 1a is a structural block diagram of hardware of a robot according to an exemplary embodiment of the present disclosure;
FIG. 1b is a line diagram of a humanoid robot according to an exemplary embodiment of the present disclosure;
FIG. 1c is a line diagram of a non-humanoid robot according to an exemplary embodiment of the present disclosure;
FIG. 1d is a schematic diagram of an environment map according to an exemplary embodiment of the present disclosure;
FIG. 1e is a schematic diagram of a passable boundary of an environment map provided in FIG. 1d;
FIG. 1f is a schematic diagram of a passable boundary obtained after the optimization of a passable boundary provided in FIG. 1e;
FIG. 1g is a schematic diagram of a target boundary selected from the optimized passable boundary provided in FIG. 1f and a navigation path planned; and
FIG. 2 is a schematic flowchart of a method for localizing a robot according to an embodiment of the present disclosure.

### DETAILED DESCRIPTION OF EXAMPLE EMBODIMENTS

For making the purposes, technical solutions and advantages of the embodiments of the present disclosure clearer, the technical solutions in the embodiments of the present disclosure will be clearly and completely described below in combination with the drawings in the embodiments of the present disclosure. It is apparent that the described embodiments are not all embodiments but part of embodiments of the present disclosure. All other embodiments obtained by those of ordinary skill in the art on the basis of the embodiments in the present disclosure without creative work shall fall within the scope of protection of the present disclosure.

Aiming at the technical problem of low accuracy in the existing robot localization, the embodiments of the present disclosure provide a solution. The basic idea is: a robot may move from a current position to a new position during a localizing process, more environment information may be acquired during the movement, and then the acquired environment information is compared with an environment map stored in the robot, which facilitates successfully localizing a pose of the robot in the stored environment map. In addition, during the movement and localization of the robot, environment information at different positions is generally different, which facilitates distinguishing similar regional environments, and may overcome the problem that an accurate pose cannot be obtained because there may be a plurality of similar regional environments when the robot stays at the original position for localizing.

The technical solutions provided by various embodiments of the present disclosure will be described in detail below with reference to the accompanying drawings.

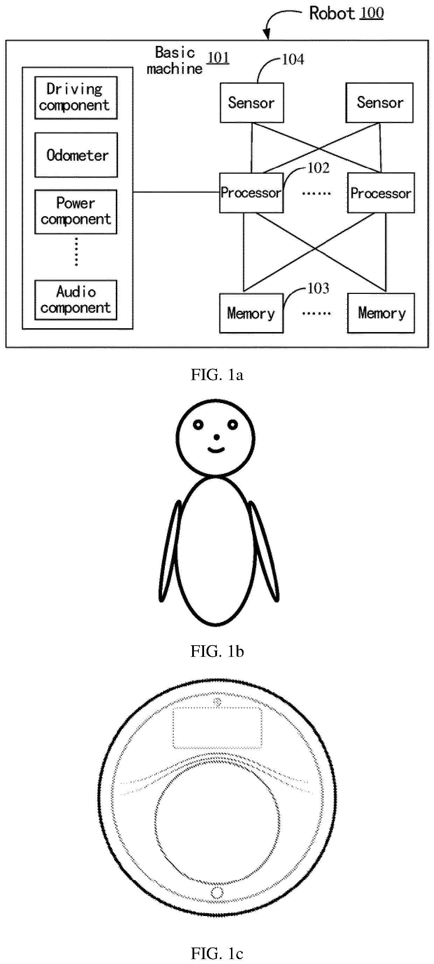

FIG. 1a is a structural block diagram of hardware of a robot according to an exemplary embodiment of the present disclosure. As shown in FIG. 1a, the robot 100 includes a basic machine 101; and the basic machine 101 is provided with one or more processors 102 and one or more memories 103 storing computer instructions. In addition, the basic machine 101 is further provided with one or more sensors 104.

It is worth noting that the one or more processors 102, the one or more memories 103, and the one or more sensors 104 may be arranged inside the basic machine 101 or arranged on the surface of the basic machine 101.

The basic machine 101 is an execution mechanism of the robot 100, and may execute the operation specified by the processor 102 in a certain environment. The basic machine 101 reflects the appearance of the robot 100 to a certain extent. In this embodiment, the appearance of the robot 100 is not limited. For example, the robot 100 may be a humanoid robot as shown in FIG. 1b, then the basic machine 101 may include, but is not limited to, mechanical structures such as the head, the hand, the wrist, the arm, the waist and the base of the robot. In addition, the robot 100 may also be a relatively simple non-humanoid robot as shown in FIG. 1c, then the basic machine 101 mainly refers to the body of the robot 100.

It is worth noting that the basic machine 101 is further provided with some basic components of the robot 100, such as a driving component, an odometer, a power component, and an audio component. Optionally, the driving component may include a driving wheel, a driving motor, a universal wheel, etc. The basic components included in different robots 100 and the structures of the basic components may be different, and only some of them are enumerated in the embodiments of the present disclosure.

The one or more memories 103 are mainly configured to store one or more computer instructions, and these computer instructions may be executed by the one or more processors 102, causing the one or more processors 102 to control the robot 100 to implement corresponding functions and complete corresponding operations or tasks. In addition to storing the computer instructions, the one or more memories 103 may further be configured to store various other data to support the operations on the robot 100. Examples of the data include instructions for any application or method operated on the robot 100, and environment maps corresponding to the environment where the robot 100 is located. The environment maps may be one or more pre-stored maps corresponding to the entire environment, or some maps being constructed previously.

The one or more memories 103 may be implemented by any type of volatile or non-volatile storage device or a combination thereof, such as a static random access memory (SRAM), an electrically erasable programmable read-only memory (EEPROM), an erasable programmable read-only memory (EPROM), a programmable read-only memory (PROM), a read-only memory (ROM), a magnetic memory, a flash memory, a magnetic disk or an optical disk.

The one or more processors 102 may be regarded as a control system of the robot 100, and may be configured to execute the computer instructions stored in the one or more memories 103 to control the robot 100 to implement corresponding functions and complete corresponding operations or tasks. It is worth noting that when the robot 100 is located in different scenarios, the functions to be implemented and the operations or tasks to be completed may be different; correspondingly, the computer instructions stored in the one or more memories 103 may also be different, and the one or more processors 102 execute the different computer instructions to control the robot 100 to implement different functions and complete different operations or tasks.

In this embodiment, the robot 100 may move autonomously, and may complete certain tasks on the basis of autonomous movement. For example, in a shopping scenario such as a supermarket or a mall, a shopping cart robot needs to move with a customer to accommodate the commodities chosen by the customer. For another example, in warehousing and sorting scenarios of some companies, a sorting robot needs to follow a sorting worker to move to picking regions of shelves, and then to sort the ordered goods. For another example, in a home cleaning scenario, a sweeping robot needs to clean a living room, a bedroom, a kitchen or other regions. In these application scenarios, the robot 100 needs to move. For the robot 100 that needs to move and be movable, it is a basic function to realize navigation and localization in its environment. Then, in the autonomous movement scenario of the robot, when the computer instructions stored in the one or more memories 103 executed by the one or more processors 102, may cause the processor 102 to control the robot 100 to implement functions related to the autonomous movement, for example, navigation and localization, re-localization, and etc.

In this embodiment, the one or more sensors 104 on the robot 100 may assist in completing the navigation and localization, re-localization, etc. of the robot 100. The one or more sensors 104 may include a vision sensor, a laser sensor, a contact sensor, a reflective light coupler, an inertial sensor, etc., but are not limited thereto.

The vision sensor may be regarded as an "eye" of the robot 100, and is mainly used to capture images of the surrounding environment of the robot 100, and these images may be referred as environment images. The vision sensor may be implemented by any device with an image capture function, for example, it may be a camera.

The laser sensor is a radar system that acquires environment information around the robot 100 by emitting a laser beam. The environment data acquired by the laser sensor may include, but is not limited to: distance, angle, etc. of an object around the robot 100. The laser sensor may be implemented by any device capable of emitting a laser beam, for example, it may be a laser radar.

Under normal circumstances, the robot 100 may perform navigation and localization according to the environment information acquired by the laser sensor or the vision sensor and the existing environment maps stored in the one or more memories 103. However, in practical applications, the robot 100 may be hijacked, for example, being moved, suspended in the air, or dragged with a large area. In these cases, the robot 100 may lack or lose the previous position information, so the current pose of the robot is needed to be re-determined, i.e., re-localized.

The contact sensor, the reflective light coupler, and the inertial sensor may be used to detect whether the hijack occurs during the use of the robot 100. For example, the bottom of the base of the robot 100 or a roller may be provided with the contact sensor, and the contact sensor is used to detect whether the robot 100 is moved or suspended, under the control of the one or more processors 102, and may further be used to determine whether the robot 100 is placed back to the ground. Alternatively, the bottom of the robot 100 is installed with the reflective light coupler, the reflective light coupler emits a light beam that can be reflected from the ground, and the operation that the robot 100 is moved or suspended and then placed back to the ground may be detected through the light beam. When the contact sensor or the reflective light coupler detects that the robot 100 is placed back to the ground, the one or more processors 102 are triggered to activate the re-localizing function. For another example, the basic machine 101 of the robot 100 is installed with the inertial sensor, such as an acceleration sensor, to detect whether the robot 100 is dragged with a large area, when the dragging of the robot 100 stops, the one or more processors 102 are triggered to activate the re-localizing function.

In this embodiment, the robot 100 stores an environment map corresponding to its environment. The robot 100 moves from a current position to a second position during the localizing process, the one or more sensors 104 acquire environment information during the movement, and the environment information during the movement is compared with the environment map stored in the robot 100 to identify (or localize) the pose of the robot 100 in the stored environment map. The pose here includes the position and orientation of the robot 100.

Optionally, the environment map may include at least one of a vision map and a grid map. The vision map is constructed in advance based on environment images captured by the vision sensor. The vision map may describe the regional environment where the robot 100 is located to a certain extent, and mainly stores information of a plurality of environment images related to the environment where the robot 100 is located, for example, poses of the robot corresponding to the environment images, feature points contained in the environment images, and descriptors of the feature points. The grid map is constructed in advance based on environment data acquired by the laser sensor, and the grid map is a rasterization product of the stored data of the regional environment where the robot 100 is located. Each grid in the grid map corresponds to a small region in the environment where the robot 100 is located. Each grid contains two types of basic information: coordinate and whether it is occupied by an obstacle. The probability value that the grid is occupied indicates the environment information of the corresponding region. If there are more grids in the grid map, the grid map describes in more detail the environment where the robot 100 is located, and correspondingly, the localizing precision based on the grid map is higher.

If the one or more sensors 104 include a vision sensor, the vision sensor may capture environment images during the movement of the robot 100 to the second position. Correspondingly, the environment maps stored in the one or more memories 103 include a vision map. Then, the robot 100 may be localized according to the environment images captured by the vision sensor during the movement of the robot 100 to the second position and the vision map.

If the one or more sensors 104 include a laser sensor, the laser sensor may acquire environment data during the movement of the robot 100 to the second position. Correspondingly, the environment maps stored in the one or more memories 103 include a grid map. Then, the robot 100 may be localized according to the environment data acquired by the laser sensor during the movement of the robot 100 to the second position and the grid map.

If the one or more sensors 104 include a vision sensor and a laser sensor, the vision sensor may capture environment images during the movement of the robot 100 to the second position, and the laser sensor may acquire environment data during the movement of the robot 100 to the second position. Correspondingly, the environment maps stored in the one or more memories 103 include a regional vision map and a regional grid map. The robot 100 may be localized according to the environment images captured by the vision sensor during the movement of the robot 100 to the second position, the vision map, the environment data acquired by the laser sensor during the movement of the robot 100 to the second position, and the grid map.

For ease of description, in the following embodiments, the environment images captured by the vision sensor during the movement of the robot 100 to the second position and the environment data acquired by the laser sensor during the movement of the robot 100 to the second position are collectively referred as environment information during the movement.

In this embodiment, the robot may move from the current position to a new position during the localizing process, more environment information may be acquired during the movement, and then the acquired environment information is compared with the environment map stored in the robot, which facilitates successfully localizing the pose of the robot in the stored environment map. In addition, during the movement and localization of the robot, environment information at different positions is generally different, so that similar regional environments may be distinguished, and the problem that an accurate pose cannot be obtained because there may be a plurality of similar regional environments when the robot stays at the original position for localizing may be overcome.

In some optional embodiments, when localizing is required, the robot 100 may first acquire environment information of the current position through the one or more sensors 104, and then compare the environment information of the current position with the stored environment map to determine the pose of the robot 100 in the stored environment map. If the comparison result this time does not meet the set comparison requirement, the one or more processors 102 may select a position different from the current position as a second position according to the environment information of the current position of the robot and perform subsequent operations in order to continue to localize the robot during the movement to the second position. Conversely, if the comparison result this time meets the set comparison requirement, subsequent localizing operations are not required.

Optionally, the comparison requirement may be preset. For example, a matching rate threshold of the acquired environment information of the current position and the stored environment map may be preset. If the matching rate of the two reaches the set matching rate threshold, the comparison result is considered to meet the set comparison requirement. If the matching rate of the two is smaller than the set matching rate threshold, the comparison result is considered to not meet the set comparison requirement.

In this optional embodiment, the robot 100 first stays at the original position for localizing. If the pose of the robot 100 can be identified (or localized), subsequent localizing operations are not required. Conversely, the robot 100 may move to the second position, and the localizing continues based on the environment information during the movement, which may improve the localizing efficiency of the robot 100. When the pose of the robot 100 staying at the original position cannot be identified (or localized), the robot 100 may move to the second position and the localizing continues based on the environment information during the movement, which may ensure that the pose of the robot 100 is identified successfully and accurately.

In another optional embodiment, when it is determined that localizing is required, the robot 100 may directly acquire environment information of its current position through the one or more sensors 104, then select a position different from the current position as the second position according to the acquired environment information of the current position, move to the second position, acquire environment information during the movement, and compare the environment information during the movement with the environment map stored in the one or more memories 103 to identify the pose of the robot 100 in the stored environment map. In this way, the process of localizing the robot 100 at the original position is skipped, and the robot 100 directly moves to the second position and is localized according to the environment information during the movement, which is suitable for the scenarios not beneficial to localizing the robot 100 at the initial position.

In the embodiments of the present disclosure, another position different from the current position may be randomly selected as the second position. Of course, the one or more processors 102 may also select another position different from the current position as the second position by other ways. For example, at least one passable boundary around the current position may be determined based on the environment information of the current position of the robot 100; a target boundary is selected from the at least one passable boundary, and the second position is determined according to the target boundary.

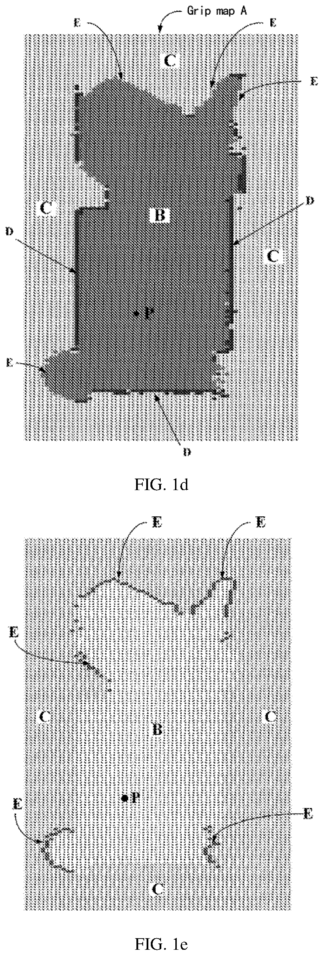

An implementation mode in which the one or more processors 102 selects a position different from the current position of the robot 100 as the second position will be exemplified below with reference to the grid map of the environment shown in FIG. 1d.

First, the grid map A shown in FIG. 1d is described. As shown in FIG. 1d, the grid map A includes two parts: a local grid map B corresponding to a local region where the current position of the robot 100 is belonged to, and a local grid map C corresponding to an unknown region. In addition, as shown in FIG. 1d, according to whether the intersecting boundary of the local region where the current position of the robot 100 is belonged to and the unknown region is blocked by an obstacle, the intersecting boundary of the local region where the current position of the robot 100 is belonged to and the unknown region is divided into a boundary blocked by an obstacle and a boundary free from obstacle blocking. For ease of description, the boundary blocked by an obstacle is referred to as an obstacle boundary D, and the boundary free from obstacle blocking is referred to as a passable boundary E. For example, the grid map A is an environment map of a hotel, the current environment region of the robot 100 is a room of the hotel, then the unknown region may be a lobby or corridor or the like of the hotel, the obstacle boundary D is a wall of the room where the robot 100 is located, and the passable boundary E is a door of the room where the robot 100 is located.

Based on the grid map A shown in FIG. 1d, the one or more processors 102 may determine, based on the environment information of the current position of the robot 100, an approximate range of the robot 100 currently in the grid map A, that is, the local grid map B, and determine at least one passable boundary E around the current position of the robot 100 based on the local grid map B, as shown in FIG. 1e; a target boundary E1 is selected from the at least one passable boundary E, and then the second position is determined according to the target boundary E1.

Optionally, when determining the second position according to the target boundary E1, the one or more processors 102 may randomly select any position on the target boundary E1 as the second position; or randomly select any position in the environment region outside the target boundary E1 as the second position. The environment region outside the target boundary E1 may be all of or part of the unknown region C. The size of the environment region outside the target boundary E1 may be determined according to the actual application scenario, which is not limited here.

Optionally, when selecting the target boundary E1, the one or more processors 102 may randomly select one of the at least one passable boundary E as the target boundary E1; or, select one of the at least one passable boundary E as the target boundary E1 according to a certain algorithm or strategy.

Hereinafter, some optional implementation modes in which the one or more processors 102 select the target boundary E1 from the at least one passable boundary E will be exemplified.

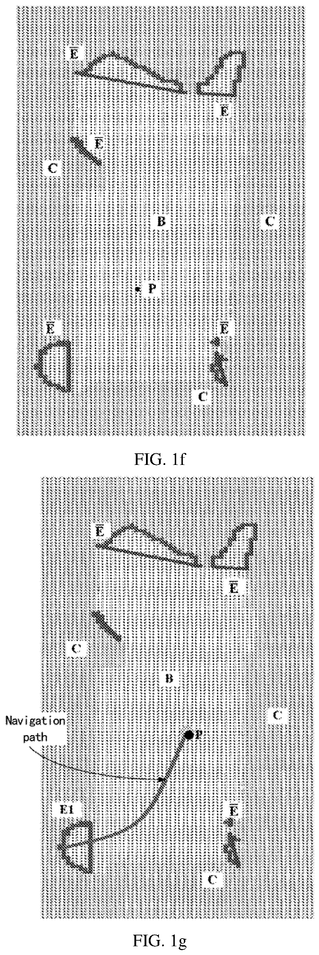

In an optional embodiment, when selecting the target boundary E1, the one or more processors 102 may optimize the at least one passable boundary E to obtain at least one optimized passable boundary E̅, as shown in FIG. 1f; and then select, according to the size of each optimized passable boundary E̅ and the distance between each optimized passable boundary E̅ and the current position P of the robot 100, the target boundary E1 from the at least one optimized passable boundary E̅, as shown in FIG. 1g. Optionally, for each optimized passable boundary E̅, the size of the optimized passable boundary E̅ may be determined according to the end points of the optimized passable boundary E̅, and the distance between the optimized passable boundary E̅ and the current position P of the robot 100 may be calculated.

Optionally, the at least one passable boundary E may be optimized by using at least one of the following methods:
Method 1: the at least one passable boundary E is optimized by using a boundary filtering method. Optionally, the boundary filtering method may be mean filtering, Gaussian filtering, median filtering, bilateral filtering, etc., but is not limited thereto. These filtering methods are all well-known technologies in the art and will not be repeated here.
Method 2: the at least one passable boundary E is optimized by using an expansion and shrinkage method. The expansion arithmetic is mainly to merge background points in contact with the passable boundary E into the passable boundary E, in order to fill the holes in the passable boundary E during the expansion of the passable boundary E to the outside. The shrinking arithmetic, also known as an erosion algorithm, is mainly to eliminate relatively discrete boundary points on the passable boundary E, in order to eliminate small and meaningless boundary points in the passable boundary E during the shrinkage of the passable boundary E to the inside.

When the at least one passable boundary E is optimized by using the boundary filtering method or the expansion and shrinkage method or the both, the at least one passable boundary E may be smoothed to eliminate noise on the passable boundary E and filter small and meaningless boundary points in the passable boundary E, thereby reducing the number of the optimized passable boundaries E̅ compared to the number of the passable boundaries E before optimization, reducing the amount of calculation for subsequently determining the size of the optimized passable boundary E̅ and calculating the distance between the optimized passable boundary E̅ and the current position of the robot 100, shortening the time for determining the target boundary E1, and then improving the localizing efficiency.

Further, a length threshold may be preset. Based on this, boundaries with sizes greater than the length threshold may be selected from the optimized passable boundaries E̅. For ease of description, these boundaries with sizes greater than the length threshold are defined as first passable boundaries. Based on the first passable boundaries, the target boundary E1 may be selected from the optimized passable boundaries by using the following implementation modes.

Mode 1: when the number of the first passable boundaries is one, the first passable boundary is determined as the target boundary E1.

Mode 2: when the number of the first passable boundaries is more than 2, and the distances between the first passable boundaries and the current position P of the robot 100 are not completely equal, the boundary closest to the current position P of the robot 100 among the first passable boundaries is determined as the target boundary E1.

Mode 3: when the number of the first passable boundaries is more than 2, and the distances between the first passable boundaries and the current position P of the robot 100 are equal, the boundary with the largest size among the first passable boundaries is determined as the target boundary E1.

It should be noted that the aforementioned length threshold may be flexibly set according to the application scenario of the robot 100. For example, if the robot 100 is a household sweeping robot, the length threshold may be the width of a door; for another example, if the robot 100 is a shopping cart robot used in a supermarket, the length threshold may be the width between adjacent shelves.

Further, when the robot 100 moves from its current position P to the second position, there are usually some obstacles, for example, a chair and a household appliance put in the room. Based on this, the at least one or more processors 102 may plan a navigation path according to the relative position relationship between the robot 100 and the second position and the environment information when controlling the robot 100 to move from its current environment region to the target environment region, as shown in FIG. 1g; then, the robot 100 is controlled to move from the current position P of the robot 100 to the second position along the planned navigation path shown in FIG. 1g. In this way, the robot may avoid obstacles on the way to the second position, so that the robot moves to the second position smoothly.

In another optional embodiment, when selecting the target boundary E1, the one or more processors 102 may optimize the at least one passable boundary E to obtain at least one optimized passable boundary E̅, as shown in FIG. 1f; plan a navigation path to the at least one optimized passable boundary according to the relative position relationship between the robot and the at least one optimized passable boundary and the environment information; and select the target boundary from the at least one optimized passable boundary according to the navigation path to the at least one optimized passable boundary.

In combination with the foregoing mode 2 and mode 3, when the number of the first passable boundaries is more than 2, a navigation path for the robot 100 to move from the current position P to each first passable boundary may be first planned according to the relative position relationship between the robot 100 and each first passable boundary and the environment information, and the target boundary E1 is selected from the first passable boundaries according to the navigation path to each first passable boundary. Preferably, the first passable boundary corresponding to the shortest navigation path among the navigation paths may be selected as the target boundary E1. However, when the lengths of the navigation paths are the same, the boundary with the largest size among the first passable boundaries is selected as the target boundary E1.

In some application scenarios, when the robot 100 moves from its current position P to the second position along the navigation path, a new boundary may appear. For example, in the warehouse sorting scenario of some companies, when the sorting robot moves to the second position through a passage (i.e., the target boundary E1) between two adjacent shelves, the two adjacent shelves may be moved, and a new boundary appears.

Based on the above application scenario, when the robot 100 moves from its current position to the second position along the navigation path, the one or more processors 102 may combine with the one or more sensors 104 to monitor whether a new passable boundary appears around the current position of the robot 100; when the new passable boundary is monitored and the new passable boundary may be used as a new target boundary, the second position is re-determined according to the new target boundary. After that, a new navigation path for the robot 100 to move from its current position to a new second position may be re-planned; and the robot 100 is controlled to move from its current position to the new second position along the new navigation path. The implementation mode for re-determining the second position according to the new target boundary may be referred to the relevant description of determining the second position in the foregoing embodiment, and will not be repeated here.

Optionally, the one or more processors 102 may judge, according to the size of the new passable boundary and the distance between the new passable boundary and the current position of the robot 100, whether the new passable boundary can be used as a new target boundary. If the size of the new passable boundary is greater than that of the target boundary E1 and the distance from the current position of the robot 100 is closer than that of the target boundary E1, the new passable boundary is determined as a new target boundary. Otherwise, it is determined that the new passable boundary cannot be used as a new target boundary, and the robot 100 is controlled to continue to move to the original second position along the original navigation path.

Further, it should be noted that when the new target boundary is determined, the new passable boundary may be optimized, and its optimization process may be referred to the descriptions of method 1 and method 2 in the above embodiment, and will not be repeated here.

In some other application scenarios, when the robot 100 moves from its current position P to the second position along the navigation path, the target boundary E1 may disappear. For example, in the warehouse sorting scenario of some companies, when the sorting robot moves to the second position through a passage (i.e., the target boundary E1) between two adjacent shelves, the passage may be temporarily blocked, that is, the target boundary E1 disappears.

Based on the above application scenario, when the robot 100 moves from its current position to the second position along the navigation path, the one or more processors 102 may combine with the one or more sensors 104 to monitor an existing state of the target boundary E1; select a new target boundary from the passable boundaries around the current position according to the environment information of the current position of the robot 100 when monitoring that the target boundary E1 disappears, and re-determine the second position according to the new target boundary; then, re-plan a new navigation path for the robot 100 to move from the current position to a new second position; and control the robot 100 to move from the current position to the new second position along the new navigation path. The implementation modes for determining the new target boundary and re-determining the second position according to the new target boundary may be referred to the relevant descriptions of determining the second position in the foregoing embodiment, and will not be repeated here.

In the above or following embodiments, the one or more processors 102 may plan a navigation path to the second position according to the environment information of the current position of the robot, and then control the robot to move to the second position along the navigation path to the second position. The path planning algorithm used includes but is not limited to: a D* algorithm, an A* algorithm, etc., which are all well-known technologies in the art, and will not be repeated here.

When the robot moves to the second position along the navigation path to the second position, the environment information during the movement may be acquired, and the acquired environment information during the movement is compared with the stored environment map to identify the pose of the robot in the stored environment map. Optionally, when the robot moves to the second position along the navigation path to the second position, the acquired environment information during the movement may be compared at least once with the stored environment map to identify the pose of the robot in the stored environment map.

For example, after the robot arrives at the second position, the acquired environment information during the movement may be compared with the stored environment map once to identify the pose of the robot in the stored environment map.

For another example, a localizing cycle may be preset, and a timer or counter is started to time the localizing cycle. In this way, when the robot moves to the second position along the navigation path to the second position, the acquired environment information during the movement may be compared with the stored environment map once when each localizing cycle is finished to identify the pose of the robot in the stored environment map. Localizing while moving is not only helpful for improving the accuracy of localizing, but also realizes instant localizing and improves the localizing efficiency.

In the embodiments of the present disclosure, no matter which implementation mode is used to determine the second position, the comparison between the acquired environment information during the movement and the stored environment map is always required. A comparison mode may be: a temporary map is constructed according to the acquired environment information during the movement; and the constructed temporary map is compared with the stored environment map to determine the pose of the robot in the stored environment map.

Further, an optional implementation mode for comparing the constructed temporary map with the stored environment map to determine the pose of the robot in the stored environment map is: each pose is traversed from the constructed temporary map to the stored environment map based on a matching algorithm, for example, if the grid size is 5 cm, a step size of 5 cm may be selected, the temporary map covers possible poses in the stored environment map, and then 5 degrees is selected for the angle step, including orientation parameters in all poses. When the grids representing obstacles on the temporary map hit the grids representing obstacles on the stored environment map, scores are added, and the pose with the highest score is determined as a global optimal solution pose; after that, the matching rate of the global optimal solution pose is calculated, and when the matching rate of the global optimal solution pose is greater than a preset matching rate threshold, the global optimal solution pose is determined as the pose of the robot.

Optionally, when the acquired environment information during the movement is more than a set environment information threshold, a multi-layer composite resolution map maybe used as the constructed temporary map; the stored environment map is processed into a composite resolution map of corresponding layers; and then, the constructed multi-layer composite resolution map is matched layer by layer with the composite resolution map corresponding to the stored environment map. Correspondingly, when the acquired environment information during the movement is less than the set environment information threshold, a single-layer resolution map may be used as the constructed temporary map, which may improve the efficiency of matching completion.

Optionally, when the bottom resolution map in the constructed multi-layer composite resolution map is matched with the bottom resolution map in the composite resolution map corresponding to the stored environment map, an Iterative Closest Point (ICP) algorithm may be used for matching. In this way, the calculation amount of map matching may be reduced, and the efficiency of matching completion may be improved.

Optionally, a distance threshold and a time threshold may also be preset. When the robot 100 moves, the moving distance and moving time of the robot 100 may be recorded. When the moving time of the robot 100 is greater than the time threshold and the moving distance is greater than the distance threshold, it is determined that the robot 100 is not within the stored environment map.

The process of localizing the robot 100 is described in the foregoing embodiments of the present disclosure. According to the diversity of application scenarios, the cases of localizing the robot 100 may be diverse. Examples are given below:
In application scenario 1, the robot in each embodiment of the present disclosure is specifically a sweeping robot. The user uses the sweeping robot to perform sweeping tasks, and the region that needs to be swept for each cleaning task is random, for example, it may be a living room, a kitchen, or a bedroom. In addition, in order to save the power of the sweeping robot, the sweeping robot may be automatically turned off when each cleaning task is finished. In this way, every time the sweeping robot is required to perform a cleaning task, the user may move the sweeping robot to the region to be cleaned, and restart the cleaning robot by means of touch, sound or a physical button. At this time, due to the restart, the previous position information of the sweeping robot is lost, and the sweeping robot needs to be re-localized to determine its position in the current region to be cleaned, so as to perform the cleaning task smoothly.

However, sometimes the environment information of the region to be cleaned may not possess self-evidence, that is, the layout of rooms may be exactly the same, for example, the size, decoration, and display of each room in a hotel are almost the same. When the sweeping robot is re-localized in a room by using the information of the room, the room cannot be distinguished, so that the current pose cannot be identified accurately. In this case, during the localizing process of the sweeping robot, a position different from the current position is selected as the second position, the target environment region may be any position in the current room or any position in the hotel corridor, lobby, etc., and the sweeping robot moves from the current position to the second position; environment information during the movement is acquired, and the acquired environment information during the movement is compared with the stored hotel environment map to identify the pose of the robot in the hotel environment map.

In application scenario 2, the robot in each embodiment of the present disclosure is specifically a shopping guide robot or a shopping cart robot used in a shopping place such as a mall or a supermarket. The shopping guide robot follows a customer in the mall or supermarket and introduces products to the customer. If the sensor of the shopping guide robot fails suddenly, or because the shopping guide robot moves too fast, the previous position information may be lost. In order to continue to serve the customer in a correct manner, the shopping guide robot needs to initiate re-localizing in order to re-localize its position in the mall or supermarket.

However, the layout of the current environment region where the shopping guide robot is located may be changed compared to the previous environment map, for example, the mall or supermarket is redecorated or the shelf display is changed. At this time, the shopping guide robot cannot correctly identify the current pose. In this case, during the localizing process of the shopping guide robot, a position different from its current position, for example, any position in the lobby of the mall, is selected as the second position, and the shopping guide robot moves from the current position to the second position; environment information during the movement is acquired, and the acquired environment information during the movement is compared with the stored mall environment map to identify the pose of the shopping guide robot in the mall environment map.

In application scenario 3, no matter what kind of robot it is, it needs to move autonomously during the process of completing the corresponding task, and navigation and localization are indispensable during the movement. During the process of robot navigation, there are certain requirements for the precision of navigation and localization. If the precision of navigation and localization cannot meet the navigation requirements, re-localizing needs to be triggered, so that navigation and localization may continue after re-localizing.

In application scenario 3, during the autonomous movement of the robot, environment information during the movement may be acquired, and the environment information previously acquired is compared with the stored environment map when each localizing cycle is finished to identify the pose of the robot in the stored environment map.

It is worth noting that the robot provided in the embodiments of the present disclosure may also establish a communication connection with other robot according to communication needs. The two robots may be connected in a wireless or wired manner. For example, the robots may be equipped with wireless communication modules, such as WiFi, Bluetooth or infrared, so that the two robots may establish a communication connection by using the WiFi, Bluetooth or infrared communication mode. In addition, the robot may be equipped with a SIM card, so that the two robots may establish a communication connection through a mobile network. The type of the mobile network may be any one of 2G (GSM), 2.5G (GPRS), 3G (WCDMA, TD-SCDMA, CDMA2000, UTMS), 4G (LTE), 4G+ (LTE+), WiMax, etc. Of course, the two robots may also establish a remote communication connection through a server.

Based on the above, when a new robot is required to replace the original robot, or a new robot needs to be added to the current environment, or a robot working in other environment is dispatched to the environment region as required, in order to facilitate the new robot to quickly start to work in the current environment, the original robot may establish a communication connection with the new robot, and send the stored environment map to the new robot through the communication connection, and of course, it may also send the acquired environment information during the movement to the new robot, thereby achieving transplantation of the environment map and the environment information between different robots, and realizing information sharing. In this way, the new robot does not need to recreate an environment map, but may directly perform automatic localization and navigation according to the received environment map, so that the new robot is quickly localized at a position in the environment map in order to quickly enter the working state.

For the new robot, it may receive the environment map sent by the original robot and store the environment map in its own memory; of course, it may also receive the environment information sent by the original robot during the movement and store the environment information in its own memory. Later, when localizing is needed, the new robot may move from the current position to the second position, environment information during the movement is acquired, and the acquired environment information during the movement is compared with the stored environment map to identify the pose of the new robot in the stored environment map.

Further, before the new robot moves from the current position to the second position, environment information of the current position may also be acquired, and the environment information of the current position is compared with the stored environment map to identify the pose of the new robot in the stored environment map. If the comparison result meets the set comparison requirement, other operations will be performed according to the localizing result. If the comparison result does not meet the set comparison requirement, the new robot may move from the current position to the second position, environment information during the movement is acquired, the environment information during the movement is compared with the stored environment map to identify the pose of the new robot in the stored environment map, and the new robot may move continuously until its pose in the stored environment map is localized. The process of localizing the new robot may be referred to the description of the foregoing or following embodiments, and will not be described in detail here.

It is worth noting that in addition to sending the stored environment map and the acquired environment information to the new robot, the original robot may also send other accumulated data to the new robot, so that the new robot may directly start to work according to the empirical data accumulated by the original robot. For example, the new robot may acquire cleaning information of the environment map from the original robot, that is, information of a region that has been cleaned and information of a region that has not been cleaned, and start the cleaning operation in the region that has not been cleaned according to the cleaning information. The new robot and the original robot quickly enter a cooperative working state, which prevents the new robot from cleaning the region that has been cleaned by the original robot, and may improve the cleaning efficiency of the environment. It is also worth noting that the original robot may be referred to as a first robot, and the new robot may be referred to as a second robot.

In addition to the aforementioned robots, some exemplary embodiments of the present disclosure further provide some methods for re-localizing the robot. These methods will be described in detail below with reference to the accompanying drawing.

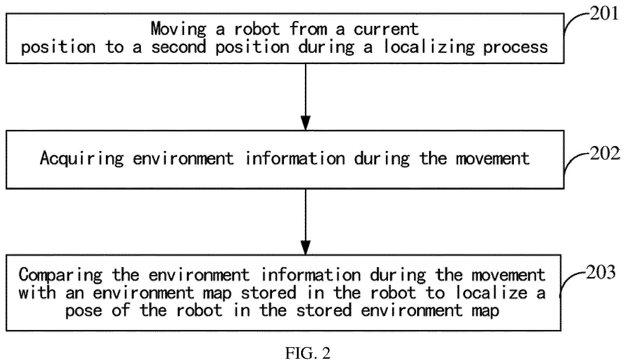

FIG. 2 is a schematic flowchart of a method for localizing a robot according to an exemplary embodiment of the present disclosure. As shown in FIG. 2, the method includes:
201, moving the robot from a current position to a second position during a localizing process;
202, acquiring environment information during the movement; and
203, comparing the environment information during the movement with an environment map stored in the robot to identify a pose of the robot in the stored environment map.

The method provided in this embodiment may be applied to a robot that may move autonomously, and is mainly used to localize the robot, that is, to determine an initial position of the robot in the environment map. This embodiment does not limit the shape of the robot, for example, it may be circular, elliptical, triangular, convex polygonal, or humanoid. The robot may implement the logic of the method for localizing the robot provided in this embodiment by installing software or APP, or writing program codes in corresponding devices.

In this embodiment, the robot may move autonomously, and navigation and localization are required during the movement. In practical applications, the robot may be hijacked, for example, moved, suspended in the air, or dragged with a large area. In these cases, the robot may lack or lose the previous position information, so the current pose of the robot needs to be re-determined.

In this embodiment, the robot stores an environment map corresponding to its environment. The robot moves from the current position to the second position during the localizing process, environment information during the movement is acquired, and the environment information during the movement is compared with the environment map stored in the robot to identify the pose of the robot in the stored environment map. The pose here includes the position and orientation of the robot.

Optionally, the environment map may include at least one of a vision map and a grid map. The vision map is constructed in advance based on environment images captured by a vision sensor. The vision map may describe the regional environment where the robot is located to a certain extent, and mainly stores information of a plurality of environment images related to the environment where the robot is located, for example, poses of the robot corresponding to the environment images, feature points contained in the environment images, and descriptors of the feature points. The grid map is constructed in advance based on environment data acquired by a laser sensor, and the grid map is a rasterization product of the stored data of the regional environment where the robot is located. Each grid in the grid map corresponds to a small region in the environment where the robot is located. Each grid contains two types of basic information: coordinate and whether it is occupied by an obstacle. The probability value that the grid is occupied indicates the environment information of the corresponding region. If there are more grids in the grid map, the grid map describes in more detail the environment where the robot is located, and correspondingly, the localizing precision based on the grid map is higher.

If the sensor on the robot includes a vision sensor, the vision sensor may capture environment images during the movement of the robot to the second position. Correspondingly, the environment maps stored in the robot include a vision map. Then, the robot may be localized according to the environment images captured by the vision sensor during the movement of the robot to the second position and the vision map.

If the sensor on the robot includes a laser sensor, the laser sensor may acquire environment data during the movement of the robot to the second position.

Correspondingly, the environment maps stored in the robot include a grid map. Then, the robot may be localized according to the environment data acquired by the laser sensor during the movement of the robot to the second position and the grid map.

If the sensor on the robot includes a vision sensor and a laser sensor, the vision sensor may capture environment images during the movement of the robot to the second position, and the laser sensor may acquire environment data during the movement of the robot to the second position. Correspondingly, the environment maps stored in the robot include a vision map and a regional grid map. The robot may be localized according to the environment images captured by the vision sensor during the movement of the robot to the second position, the vision map, the environment data acquired by the laser sensor during the movement of the robot to the second position, and the grid map.

For ease of description, in the following embodiments, the environment images captured by the vision sensor during the movement of the robot to the second position and the environment data acquired by the laser sensor during the movement of the robot to the second position are collectively referred to as environment information during the movement.

In this embodiment, the robot may move from the current position to a new position during the localizing process, more environment information may be acquired during the movement, and then the acquired environment information is compared with the environment map stored in the robot, which facilitates successfully localizing the pose of the robot in the stored environment map. In addition, during the movement and localization of the robot, environment information at different positions is generally different, so that similar regional environments may be distinguished, and the problem that an accurate pose cannot be obtained because there may be a plurality of similar regional environments when the robot stays at the original position for localizing may be overcome.

In some optional embodiments, before step 201, when localizing is required, the robot may first acquire environment information of the current position, and then compare the environment information of the current position with the stored environment map to determine its pose in the stored environment map. If the comparison result this time does not meet the set comparison requirement, the robot may select a position different from the current position as a second position according to the environment information of its current position and perform subsequent operations in order to continue the localizing during the movement to the second position. Conversely, if the comparison result this time meets the set comparison requirement, subsequent localizing operations are not required.

Optionally, the comparison requirement may be preset. For example, a matching rate threshold of the acquired environment information of the current position and the stored environment map may be preset. If the matching rate of the two reaches the set matching rate threshold, the comparison result is considered to meet the set comparison requirement. If the matching rate of the two is smaller than the set matching rate threshold, the comparison result is considered to not meet the set comparison requirement.

In this optional embodiment, the robot first stays at the original position for localizing. If the pose of the robot can be identified, subsequent localizing operations are not required. Conversely, the robot may move to the second position, and the localizing continues based on the environment information during the movement, which may improve the localizing efficiency of the robot. When the pose of the robot staying at the original position cannot be identified, the robot may move to the second position and the localizing continues based on the environment information during the movement, which may ensure that the pose of the robot is identified successfully and accurately.

In another optional embodiment, when it is determined that localizing is required, the robot may directly acquire environment information of its current position, then select a position different from the current position as the second position according to the acquired environment information of the current position, move to the second position, acquire environment information during the movement, and compare the environment information during the movement with the stored environment map to identify the pose of the robot in the stored environment map. In this way, the process of localizing the robot at the original position is skipped, and the robot directly moves to the second position and is localized according to the environment information during the movement, which is suitable for the scenarios not beneficial to localizing the robot at the initial position.

In the embodiments of the present disclosure, another position different from the current position may be randomly selected as the second position. Of course, another position different from the current position may also be selected as the second position by other ways. For example, at least one passable boundary around the current position may be determined based on the environment information of the current position of the robot; a target boundary is selected from the at least one passable boundary, and the second position is determined according to the target boundary.

An implementation mode for selecting a position different from the current position of the robot as the second position before step 201 will be exemplified below with reference to the grid map of the environment shown in FIG. 1d.

First, the grid map A shown in FIG. 1d is described. As shown in FIG. 1d, the grid map A includes two parts: a local grid map B corresponding to a local region where the current position of the robot is belonged to, and a local grid map C corresponding to an unknown region. In addition, as shown in FIG. 1d, according to whether the intersecting boundary of the local region where the current position of the robot is belonged to and the unknown region is blocked by an obstacle, the intersecting boundary of the local region where the current position of the robot is belonged to and the unknown region is divided into a boundary blocked by an obstacle and a boundary free from obstacle blocking. For ease of description, the boundary blocked by an obstacle is referred to as an obstacle boundary D, and the boundary free from obstacle blocking is referred to as a passable boundary E. For example, the grid map A is an environment map of a hotel, the current environment region of the robot is a room of the hotel, then the unknown region may be a lobby or corridor or the like of the hotel, the obstacle boundary D is a wall of the room where the robot is located, and the passable boundary E is a door of the room where the robot is located.

Based on the grid map A shown in FIG. 1d, an approximate range of the robot currently in the grid map A may be determined based on the environment information of the current position of the robot, that is, the local grid map B, and at least one passable boundary E around the current position of the robot is determined based on the local grid map B, as shown in FIG. 1e; a target boundary E1 is selected from the at least one passable boundary E, and then the second position is determined according to the target boundary E1.

Optionally, when determining the second position according to the target boundary E1, any position on the target boundary E1 may be randomly selected as the second position; or any position in the environment region outside the target boundary E1 may be randomly selected as the second position. The environment region outside the target boundary E1 may be all of or part of the unknown region C. The size of the environment region outside the target boundary E1 may be determined according to the actual application scenario, which is not limited here.

Optionally, when selecting the target boundary E1, one of the at least one passable boundary E may be randomly selected as the target boundary E1; or, one of the at least one passable boundary E is selected as the target boundary E1 according to a certain algorithm or strategy.

Hereinafter, some optional implementation modes for selecting the target boundary E1 from the at least one passable boundary E will be exemplified.

In an optional embodiment, when selecting the target boundary E1, the at least one passable boundary E may be optimized to obtain at least one optimized passable boundary E̅, as shown in FIG. 1f; and then, according to the size of each optimized passable boundary E̅ and the distance between each optimized passable boundary E and the current position P of the robot, the target boundary E1 is selected from the at least one optimized passable boundary E̅, as shown in FIG. 1g. Optionally, for each optimized passable boundary E̅, the size of the optimized passable boundary E̅ may be determined according to the end points of the optimized passable boundary E, and the distance between the optimized passable boundary E̅ and the current position P of the robot may be calculated.

Optionally, detailed descriptions of methods for optimizing the at least one passable boundary E and their technical effects may be referred to the relevant descriptions of method 1 and method 2 in the embodiment of the robot, and will not be repeated here. Further, a length threshold may be preset. Based on this, boundaries with sizes greater than the length threshold may be selected from the optimized passable boundaries E̅. For ease of description, these boundaries with sizes greater than the length threshold are defined as first passable boundaries. The specific implementation modes for selecting the target boundary E1 from the optimized passable boundaries based on the first passable boundaries may be referred to the relevant descriptions of the implementation modes 1-3 in the embodiment of the robot, and will not be repeated here.

Further, when the robot moves from its current position P to the second position, there are usually some obstacles, e.g., a chair and a household appliance put in the room. Based on this, when the robot moves from its current environment region to the target environment region, a navigation path may be planned according to the relative position relationship between the robot and the second position and the environment information, as shown in FIG. 1g; then, the robot moves from the current position P of the robot to the second position along the planned navigation path shown in FIG. 1g. In this way, the robot may avoid obstacles on the way to the second position, so that the robot moves to the second position smoothly.

In another optional embodiment, when selecting the target boundary E1, the at least one passable boundary E may be optimized to obtain at least one optimized passable boundary E̅, as shown in FIG. 1f; a navigation path to the at least one optimized passable boundary is planned according to the relative position relationship between the robot and the at least one optimized boundary and the environment map; and the target boundary is selected from the at least one optimized passable boundary according to the navigation path to the at least one optimized passable boundary.

In combination with the foregoing mode 2 and mode 3, when the number of the first passable boundaries is more than 2, a navigation path for the robot to move from the current position P to each first passable boundary may be first planned according to the relative position relationship between the robot and each first passable boundary and the environment information, and the target boundary E1 is selected from the first passable boundaries according to the navigation path to each first passable boundary. Preferably, the first passable boundary corresponding to the shortest navigation path among the navigation paths may be selected as the target boundary E1. However, when the lengths of the navigation paths are the same, the boundary with the largest size among the first passable boundaries is selected as the target boundary E1.

In some application scenarios, when the robot moves from its current position P to the second position along the navigation path, a new boundary may appear. For example, in the warehouse sorting scenario of some companies, when the sorting robot moves to the second position through a passage (i.e., the target boundary E1) between two adjacent shelves, the two adjacent shelves may be moved, and a new boundary appears.

Based on the above application scenario, when the robot moves from its current position to the second position along the navigation path, whether a new passable boundary appears around the current position of the robot may be monitored; when the new passable boundary is monitored and the new passable boundary may be used as a new target boundary, the second position is re-determined according to the new target boundary. After that, a new navigation path for the robot to move from its current position to a new second position may be re-planned; and the robot moves from its current position to the new second position along the new navigation path. The implementation mode for re-determining the second position according to the new target boundary may be referred to the relevant description of determining the second position in the foregoing embodiment, and will not be repeated here.

Optionally, whether the new passable boundary can be used as a new target boundary may be judged according to the size of the new passable boundary and the distance between the new passable boundary and the current position of the robot. If the size of the new passable boundary is greater than that of the target boundary E1 and the distance from the current position of the robot is closer than that of the target boundary E1, the new passable boundary is determined as a new target boundary. Otherwise, it is determined that the new passable boundary cannot be used as a new target boundary, and the robot continues to move to the original second position along the original navigation path.

Further, it should be noted that when the new target boundary is determined, the new passable boundary may be optimized, and its optimization process may be referred to the descriptions of method 1 and method 2 in the above embodiment, and will not be repeated here.

In some other application scenarios, when the robot moves from its current position P to the second position along the navigation path, the target boundary E1 may disappear. For example, in the warehouse sorting scenario of some companies, when the sorting robot moves to the second position through a passage (i.e., the target boundary E1) between two adjacent shelves, the passage may be temporarily blocked, that is, the target boundary E1 disappears.

Based on the above application scenario, when the robot moves from its current position to the second position along the navigation path, an existing state of the target boundary E1 may be monitored; when it is monitored that the target boundary E1 disappears, a new target boundary is selected from the passable boundaries around the current position according to the environment information of the current position of the robot, and the second position is re-determined according to the new target boundary; then, a new navigation path for the robot to move from the current position to the new second position is re-planned; and the robot moves from the current position to the new second position along the new navigation path. The implementation modes for determining the new target boundary and re-determining the second position according to the new target boundary may be referred to the relevant descriptions of determining the second position in the foregoing embodiment, and will not be repeated here.

In the above or following embodiments, in step 201, a navigation path to the second position may be planned according to the environment information of the current position of the robot; and then the robot moves to the second position along the navigation path to the second position. The path planning algorithm used includes but is not limited to: a D* algorithm, an A* algorithm, etc., which are all well-known technologies in the art, and will not be repeated here.

When the robot moves to the second position along the navigation path to the second position, the environment information during the movement may be acquired, and the acquired environment information during the movement is compared with the stored environment map to identify the pose of the robot in the stored environment map. Optionally, when the robot moves to the second position along the navigation path to the second position, the acquired environment information during the movement may be compared at least once with the stored environment map to identify the pose of the robot in the stored environment map.

For example, after the robot arrives at the second position, the acquired environment information during the movement may be compared with the stored environment map once to identify the pose of the robot in the stored environment map.

For another example, a localizing cycle may be preset, and a timer or counter is started to time the localizing cycle. In this way, when the robot moves to the second position along the navigation path to the second position, the acquired environment information during the movement may be compared with the stored environment map once when each localizing cycle is finished to identify the pose of the robot in the stored environment map. Localizing while moving is not only helpful for improving the accuracy of localizing, but also realizes instant localizing and improves the localizing efficiency.

In the embodiment of the present disclosure, no matter which implementation mode is used to determine the second position, the comparison between the acquired environment information during the movement and the stored environment map is required in step 203. A comparison mode may be: a temporary map is constructed according to the acquired environment information during the movement; and the constructed temporary map is compared with the stored environment map to determine the pose of the robot in the stored environment map. The process of comparing the temporary map with the stored environment map may be referred to the foregoing embodiment, and will not be repeated here.

It should be noted that the execution subject of each step of the method provided in the foregoing embodiments may be the same device, or different devices. For example, the execution subject of step 201 and step 202 may be device A; for another example, the execution subject of step 201 may be device A, and the execution subject of step 202 may be device B.

In addition, some processes described in the foregoing embodiments and drawings include a plurality of operations shown with a specific order, but it should be clearly understood that these operations may be performed out of the order or performed in parallel, and the serial numbers of the operations, e.g., 201, 202, are only used to distinguish different operations, and do not represent any execution order. Moreover, these processes may include more or less operations, and these operations may be executed sequentially or in parallel. It should be noted that the descriptions of "first" and "second" here are used to distinguish different messages, devices, modules, etc., neither represent a sequence, nor define that the "first" and "second" are different types.

Correspondingly, an embodiment of the present disclosure further provides a computer-readable storage medium storing computer instructions that, when executed by one or more processors, cause the one or more processors to perform the following operations:
A robot is controlled to move from a current position to a second position during a localizing process; environment information during the movement is acquired; and the environment information during the movement is compared with an environment map stored in the robot to identify a pose of the robot in the stored environment map.

In an optional implementation mode, the operations performed by the one or more processors further include: acquiring environment information of the current position of the robot; and selecting a position different from the current position as the second position according to the environment information of the current position.

In an optional implementation mode, the operations performed by the one or more processors further include: comparing the environment information of the current position of the robot with the environment map stored in the robot to identify the pose of the robot in the stored environment map; and if the comparison result does not meet set comparison requirements, selecting a position different from the current position as the second position and performing subsequent operations.

In an optional implementation mode, the operation of controlling the robot to move to the second position includes: planning a navigation path to the second position according to the environment information of the current position of the robot; and controlling the robot to move to the second position along the navigation path to the second position. Correspondingly, the operation of localizing a pose of the robot in the stored environment map includes: during the process of controlling the robot to move to the second position along the navigation path to the second position, the environment information during the movement is compared at least once with the environment map stored in the robot to identify the pose of the robot in the stored environment map.

In an optional implementation mode, the operation of selecting the second position further includes: determining at least one passable boundary around the current position based on the environment information of the current position of the robot; selecting a target boundary from the at least one passable boundary, and determining the second position according to the target boundary.

In an optional implementation mode, the operation of selecting a target boundary includes: optimizing the at least one passable boundary to obtain at least one optimized passable boundary; planning a navigation path for the robot to the at least one optimized passable boundary according to the relative position relationship between the robot and the at least one optimized boundary and the environment map; and selecting the target boundary from the at least one optimized passable boundary according to the navigation path to the at least one optimized passable boundary.

In an optional implementation mode, the operation of selecting, by the one or more processors, the target boundary further includes: optimizing the at least one passable boundary to obtain at least one optimized passable boundary; and selecting the target boundary from the at least one optimized passable boundary according to the size of each optimized passable boundary and the distance between each optimized passable boundary and the current position of the robot.

In an optional implementation mode, the operation of determining the second position further includes: selecting a position from the target boundary as the second position; or, selecting a position from an environment region outside the target boundary as the second position.

In an optional implementation mode, the operations performed by the one or more processors further include: monitoring whether a new passable boundary appears around the current position during the process of controlling the robot to move to the second position; and when the new passable boundary appears and satisfies target boundary conditions, using the new passable boundary as a new target boundary, and re-determining the second position according to the new target boundary.

In an optional implementation mode, the operations performed by the one or more processors further include: during the process of controlling the robot to move to the second position, monitoring an existing state of the target boundary; and when the target boundary disappears, selecting a new target boundary from the passable boundaries around the current position, and re-determining the second position according to the new target boundary.

Those skilled in the art should know that the embodiment of the present disclosure may be provided as a method, a system or a computer program product. Therefore, the present disclosure may adopt a form of pure hardware embodiment, pure software embodiment and combined software and hardware embodiment. Moreover, the present disclosure may adopt a form of computer program product implemented on one or more computer-available storage media (including, but not limited to, a disk memory, a Compact Disc Read-Only Memory (CD-ROM) and an optical memory) including computer-available program codes.

The present disclosure is described with reference to flowcharts and/or block diagrams of the method, a device (system) and computer program product according to the embodiment of the present disclosure. It is to be understood that each flow and/or block in the flowcharts and/or the block diagrams and combinations of the flows and/or blocks in the flowcharts and/or the block diagrams may be implemented by computer program instructions. These computer program instructions may be provided for a universal computer, a dedicated computer, an embedded processor or a processor of another programmable data processing device to generate a machine, so that an apparatus for realizing a function specified in one flow or more flows in the flowcharts and/or one block or more blocks in the block diagrams is generated by the instructions executed through the computer or the processor of the other programmable data processing device.

These computer program instructions may also be stored in a computer-readable memory capable of guiding the computer or the other programmable data processing device to work in a specific manner, so that a product including an instruction apparatus may be generated by the instructions stored in the computer-readable memory, the instruction apparatus realizing the function specified in one flow or many flows in the flowcharts and/or one block or many blocks in the block diagrams. These computer program instructions may further be loaded onto the computer or the other programmable data processing device, so that a series of operating steps are executed on the computer or the other programmable data processing device to generate processing implemented by the computer, and steps for realizing the function specified in one flow or many flows in the flowcharts and/or one block or many blocks in the block diagrams are provided by the instructions executed on the computer or the other programmable data processing device.

In a typical configuration, a computing device includes one or more processors (CPUs), an input/output interface, a network interface, and a memory.

The memory may include a non-permanent memory, a random access memory (RAM), and/or a non-volatile memory in a computer-readable medium, such as a read-only memory (ROM) or a flash RAM. The memory is an example of a computer-readable medium.

The computer-readable medium includes permanent and non-permanent, mobile and non-mobile media, which may implement information storage by any method or technology. The information may be a computer-readable instruction, a data structure, a program module, or other data. Examples of computer storage media include, but are not limited to, a phase change RAM (PRAM), a static random access memory (SRAM), a dynamic random access memory (DRAM), other types of random access memories (RAMs), a read-only memory (ROM), an electrically erasable programmable read-only memory (EEPROM), a flash memory or other memory technologies, a compact disk read-only memory (CD-ROM), a digital versatile disk (DVD) or other optical memories, a magnetic tape cartridge, a magnetic tape storage device or other magnetic storage devices or any other non-transmission media, which may be used to store information accessible by a computing device. As defined herein, the computer-readable medium does not include non-transitory computer-readable media such as modulated data signals and carrier waves.

It is also to be noted that terms "include", "contain" or any other variants thereof are intended to include nonexclusive inclusions, thereby ensuring that a commodity or system including a series of elements not only includes those elements but also includes other elements which are not clearly listed or further includes elements intrinsic to the commodity or the system. Under the condition of no more restrictions, an element defined by statement "including alan" does not exclude existence of another element which is the same in a commodity or system including the element.

## Claims

1. A method for localizing a robot (100), comprising:
acquiring, by the robot (100), environment information of a current position;
comparing, by the robot (100), the environment information of the current position with the environment map stored in the robot (100) to obtain a comparison result;
when the comparison result does not meet a set comparison requirement, determining, by the robot (100), at least one passable boundary around the current position based on the environment information of the current position; and selecting a target boundary from the at least one passable boundary, and determining a second position according to the target boundary; wherein the passable boundary is a boundary free from obstacle blocking;
moving (201) the robot (100) from the current position to the second position during a localizing process;
acquiring (202) environment information of an environment in which the robot (100) moves during the movement; and
comparing (203) the environment information with an environment map stored in the robot (100) to identify a pose of the robot (100) in the stored environment map, wherein the pose comprises a position and orientation of the robot (100).

2. The method according to claim 1, wherein before the moving (201) the robot (100) from the current position to the second position, further comprises:
selecting a position different from the current position as the second position according to the environment information of the current position.

3. The method according to claim 2, wherein the moving (201) the robot (100) from the current position to the second position, comprises:
planning, by the robot (100), a navigation path to the second position according to the environment information of the current position; and
moving to the second position along the navigation path to the second position;
the comparing (203) the environment information during the movement with the environment map stored in the robot (100) to identify the pose of the robot (100) in the stored environment map, comprises:
during the process of moving to the second position along the navigation path to the second position, comparing at least once the environment information during the movement with the environment map stored in the robot (100) to identify the pose of the robot (100) in the stored environment map.

4. The method according to claim 1, wherein the selecting the target boundary from the at least one passable boundary comprises:
optimizing the at least one passable boundary to obtain at least one optimized passable boundary;
planning a navigation path to the at least one optimized passable boundary according to a relative position relationship between the robot (100) and the at least one optimized boundary and the environment information; and
selecting the target boundary from the at least one optimized passable boundary according to the navigation path to the at least one optimized passable boundary.

5. The method according to claim 1, wherein the selecting the target boundary from the at least one passable boundary, comprises:
optimizing the at least one passable boundary to obtain at least one optimized passable boundary; and
selecting the target boundary from the at least one optimized passable boundary according to a size of each optimized passable boundary and a distance between each optimized passable boundary and the current position of the robot (100).

6. The method according to claim 1, wherein the determining the second position according to the target boundary, comprises:
selecting a position from the target boundary as the second position; or,
selecting a position from an environment region outside the target boundary as the second position.

7. The method according to any of claims 1 to 6, further comprising:
during the movement of the robot (100) to the second position, monitoring whether a new passable boundary appears around the current position; and
when the new passable boundary appears and satisfies a target boundary condition, using the new passable boundary as a new target boundary, and re-determining the second position according to the new target boundary.

8. The method according to any of claims 1 to 6, further comprising:
during the movement of the robot (100) to the second position, monitoring an existing state of the target boundary; and
when the target boundary disappears, selecting a new target boundary from a passable boundary around the current position, and re-determining the second position according to the new target boundary.

9. A robot (100), comprising: a basic machine (101), wherein the basic machine (101) is provided with one or more sensors (104), one or more processors (102), and one or more memories (103) storing computer instructions;
the one or more memories (103) are configured to store computer instructions and an environment map;
the one or more processors (102) are configured to execute the computer instructions for:
acquiring environment information of a current position;
comparing the environment information of the current position with the environment map stored in the robot (100) to obtain a comparison result;
when the comparison result does not meet a set comparison requirement, determining at least one passable boundary around the current position based on the environment information of the current position of the robot (100); and selecting a target boundary from the at least one passable boundary, and determining a second position according to the target boundary; wherein the passable boundary is a boundary free from obstacle blocking;
controlling the robot (100) to move from the current position to the second position during a localizing process;
acquiring environment information of an environment in which the robot (100) moves during the movement by the one or more sensors (104); and
comparing the environment information with the environment map stored in the one or more memories (103) to identify a pose of the robot (100) in the stored environment map, wherein the pose comprises a position and orientation of the robot (100).

10. The robot (100) according to claim 9, wherein before the controlling the robot (100) to move from the current position to the second position, the one or more processors (102) are further for:
selecting a position different from the current position as the second position according to the environment information of the current position.

11. The robot (100) according to claim 10, wherein when controlling the robot (100) to move to the second position, the one or more processors (102) are specifically for:
planning a navigation path to the second position according to the environment information of the current position of the robot (100); and
controlling the robot (100) to move to the second position along the navigation path to the second position;
when localizing the pose of the robot (100) in the stored environment map, the one or more processors (102) are specifically configured for:
during the process of controlling the robot (100) to move to the second position along the navigation path to the second position, comparing at least once the environment information during the movement with the environment map stored in the robot (100) to identify the pose of the robot (100) in the stored environment map.

12. The robot (100) according to claim 9, wherein when selecting the target boundary, the one or more processors (102) are specifically configured for:
optimizing the at least one passable boundary to obtain at least one optimized passable boundary;
planning a navigation path to the at least one optimized passable boundary according to the relative position relationship between the robot (100) and the at least one optimized boundary and the environment information; and
selecting the target boundary from the at least one optimized passable boundary according to the navigation path to the at least one optimized passable boundary.

13. The robot (100) according to claim 9, wherein when selecting the target boundary, the one or more processors (102) are specifically for:
optimizing the at least one passable boundary to obtain at least one optimized passable boundary; and
selecting the target boundary from the at least one optimized passable boundary according to a size of each optimized passable boundary and a distance between each optimized passable boundary and the current position of the robot (100).

14. The robot (100) according to claim 9, wherein when determining the second position according to the target boundary, the one or more processors (102) are specifically for:
selecting a position from the target boundary as the second position; or,
selecting a position from an environment region outside the target boundary as the second position.

15. The robot (100) according to any of claims 9 to 15, wherein the one or more processors (102) are further configured to:
during the process of controlling the robot (100) to move to the second position, monitoring whether a new passable boundary appears around the current position of the robot (100); and
when the new passable boundary appears and satisfies a target boundary condition, using the new passable boundary as a new target boundary, and re-determining the second position according to the new target boundary.

16. The robot (100) according to any of claims 9 to 15, wherein the one or more processors (102) are further for:
during the process of controlling the robot (100) to move to the second position, monitoring an existing state of the target boundary; and
when the target boundary disappears, selecting a new target boundary from a passable boundary around the current position of the robot (100), and re-determining the second position according to the new target boundary.

17. A computer-readable storage medium storing computer instructions, when the computer instructions are executed by one or more processors (102), causing the one or more processors (102) to perform the following operations:
acquiring environment information of a current position;
comparing the environment information of the current position with the environment map stored in a robot (100) to obtain a comparison result;
when the comparison result does not meet a set comparison requirement, determining at least one passable boundary around the current position based on the environment information of the current position; and selecting a target boundary from the at least one passable boundary, and determining a second position according to the target boundary; wherein the passable boundary is a boundary free from obstacle blocking;
controlling the robot (100) to move from a current position to the second position during a localizing process;
acquiring environment information of an environment in which the robot (100) moves during the movement; and
comparing the environment information with a stored environment map to identify a pose of the robot (100) in the stored environment map, wherein the pose comprises a position and orientation of the robot (100).

## Patentansprüche

1. Verfahren zum Lokalisieren eines Roboters (100), umfassend:
Erfassen von Umgebungsinformationen einer aktuellen Position durch den Roboter (100);
Vergleichen der Umgebungsinformationen der aktuellen Position durch den Roboter (100) mit der in dem Roboter (100) gespeicherten Umgebungskarte, um ein Vergleichsergebnis zu erhalten;
Wenn das Vergleichsergebnis eine festgelegte Vergleichsanforderung nicht erfüllt, Bestimmen, durch den Roboter (100), mindestens einer passierbaren Grenze um die aktuelle Position auf Grundlage der Umgebungsinformationen der aktuellen Position; und Auswählen einer Zielgrenze aus der mindestens einen passierbaren Grenze und Bestimmen einer zweiten Position gemäß der Zielgrenze; wobei die passierbare Grenze eine Grenze ist, die frei von Hindernisblockierung ist;
Bewegen (201) des Roboters (100) von der aktuellen Position zu der zweiten Position während eines Lokalisierungsprozesses;
Erfassen (202) von Umgebungsinformationen einer Umgebung, in der sich der Roboter (100) während der Bewegung bewegt; und
Vergleichen (203) der Umgebungsinformationen mit einer in dem Roboter (100) gespeicherten Umgebungskarte, um eine Pose des Roboters (100) in der gespeicherten Umgebungskarte zu identifizieren, wobei die Pose eine Position und Ausrichtung des Roboters (100) umfasst.

2. Verfahren nach Anspruch 1, wobei vor dem Bewegen (201) des Roboters (100) von der aktuellen Position in die zweite Position ferner Folgendes umfasst:
Auswählen einer Position, die sich von der aktuellen Position unterscheidet, als die zweite Position gemäß den Umgebungsinformationen der aktuellen Position.

3. Verfahren nach Anspruch 2, wobei das Bewegen (201) des Roboters (100) von der aktuellen Position in die zweite Position Folgendes umfasst:
Planen eines Navigationspfads zu der zweiten Position durch den Roboter (100) gemäß den Umgebungsinformationen der aktuellen Position; und
Bewegen zu der zweiten Position entlang des Navigationspfads zu der zweiten Position;
Das Vergleichen (203) der Umgebungsinformationen während der Bewegung mit der in dem Roboter (100) gespeicherten Umgebungskarte, um die Pose des Roboters (100) in der gespeicherten Umgebungskarte zu identifizieren, Folgendes umfasst:
Während des Prozesses des Bewegens zu der zweiten Position entlang des Navigationspfads zu der zweiten Position, Vergleichen mindestens einmal der Umgebungsinformationen während der Bewegung mit der in dem Roboter (100) gespeicherten Umgebungskarte, um die Pose des Roboters (100) in der gespeicherten Umgebungskarte zu identifizieren.

4. Verfahren nach Anspruch 1, wobei das Auswählen der Zielgrenze aus der mindestens einen passierbaren Grenze Folgendes umfasst:
Optimieren der mindestens einen passierbaren Grenze, um mindestens eine optimierte passierbare Grenze zu erhalten;
Planen eines Navigationspfads zu der mindestens einen optimierten passierbaren Grenze gemäß einer relativen Positionsbeziehung zwischen dem Roboter (100) und der mindestens einen optimierten Grenze und den Umgebungsinformationen; und
Auswählen der Zielgrenze von der mindestens einen optimierten passierbaren Grenze gemäß dem Navigationspfad zu der mindestens einen optimierten passierbaren Grenze.

5. Verfahren nach Anspruch 1, wobei das Auswählen der Zielgrenze aus der mindestens einen passierbaren Grenze Folgendes umfasst:
Optimieren der mindestens einen passierbaren Grenze, um mindestens eine optimierte passierbare Grenze zu erhalten; und
Auswählen der Zielgrenze aus der mindestens einen optimierten passierbaren Grenze gemäß einer Größe jeder optimierten passierbaren Grenze und einem Abstand zwischen jeder optimierten passierbaren Grenze und der aktuellen Position des Roboters (100).

6. Verfahren nach Anspruch 1, wobei das Bestimmen der zweiten Position gemäß der Zielgrenze Folgendes umfasst:
Auswählen einer Position von der Zielgrenze als die zweite Position; oder
Auswählen einer Position aus einer Umgebungsregion außerhalb der Zielgrenze als die zweite Position.

7. Verfahren nach einem der Ansprüche 1 bis 6, umfassend:
Während der Bewegung des Roboters (100) in die zweite Position, Überwachen, ob eine neue passierbare Grenze um die aktuelle Position erscheint; und
Wenn die neue passierbare Grenze erscheint und eine Zielgrenzenbedingung erfüllt, Verwenden der neuen passierbaren Grenze als eine neue Zielgrenze und erneutes Bestimmen der zweiten Position gemäß der neuen Zielgrenze.

8. Verfahren nach einem der Ansprüche 1 bis 6, umfassend:
Während der Bewegung des Roboters (100) in die zweite Position Überwachen eines vorhandenen Zustands der Zielgrenze; und
Wenn die Zielgrenze verschwindet, Auswählen einer neuen Zielgrenze aus einer passierbaren Grenze um die aktuelle Position und erneutes Bestimmen der zweiten Position gemäß der neuen Zielgrenze.

9. Roboter (100), umfassend: eine Grundmaschine (101), wobei die Grundmaschine (101) mit einem oder mehreren Sensoren (104), einem oder mehreren Prozessoren (102) und einem oder mehreren Speichern (103), die Computeranweisungen speichern, versehen ist;
Der eine oder die mehreren Speicher (103) sind konfiguriert, um Computeranweisungen und eine Umgebungskarte zu speichern;
Der eine oder die mehreren Prozessoren (102) sind konfiguriert, um die Computeranweisungen auszuführen für:
Erfassen von Umgebungsinformationen einer aktuellen Position;
Vergleichen der Umgebungsinformationen der aktuellen Position mit der in dem Roboter (100) gespeicherten Umgebungskarte, um ein Vergleichsergebnis zu erhalten;
Wenn das Vergleichsergebnis eine eingestellte Vergleichsanforderung nicht erfüllt, Bestimmen mindestens einer befahrbaren Grenze um die aktuelle Position herum auf der Grundlage der Umgebungsinformationen der aktuellen Position des Roboters (100); und Auswählen einer Zielgrenze aus der mindestens einen befahrbaren Grenze und Bestimmen einer zweiten Position gemäß der Zielgrenze; wobei die befahrbare Grenze eine Grenze ist, die frei von Hindernisblockierung ist;
Steuerung des Roboters (100) zur Bewegung von der aktuellen Position zur zweiten Position während eines Lokalisierungsprozesses;
Erfassen von Umgebungsinformationen einer Umgebung, in der sich der Roboter (100) während der Bewegung bewegt, durch den einen oder die mehreren Sensoren (104); und
Vergleichen der Umgebungsinformationen mit der in dem einen oder den mehreren Speichern (103) gespeicherten Umgebungskarte, um eine Position des Roboters (100) in der gespeicherten Umgebungskarte zu identifizieren, wobei die Position eine Position und Ausrichtung des Roboters (100) umfasst.

10. Roboter (100) nach Anspruch 9, wobei vor der Steuerung des Roboters (100) zum Bewegen von der aktuellen Position zur zweiten Position der eine oder die mehreren Prozessoren (102) weiterhin dienen zum:
Auswählen einer Position, die sich von der aktuellen Position unterscheidet, als die zweite Position gemäß den Umgebungsinformationen der aktuellen Position.

11. Roboter (100) nach Anspruch 10, wobei, wenn der Roboter (100) gesteuert wird, um sich in die zweite Position zu bewegen, der eine oder die mehreren Prozessoren (102) speziell für Folgendes vorgesehen sind:
Planen eines Navigationspfads zu der zweiten Position gemäß den Umgebungsinformationen der aktuellen Position des Roboters (100); und
Steuern des Roboters (100), um sich zu der zweiten Position entlang des Navigationspfads zu der zweiten Position zu bewegen;
Wenn die Pose des Roboters (100) in der gespeicherten Umgebungskarte lokalisiert wird, sind der eine oder die mehreren Prozessoren (102) speziell konfiguriert für:
Während des Prozesses der Steuerung des Roboters (100), um sich zu der zweiten Position entlang des Navigationspfades zu der zweiten Position zu bewegen, mindestens einmal die Umgebungsinformationen während der Bewegung mit der im Roboter (100) gespeicherten Umgebungskarte zu vergleichen, um die Position des Roboters (100) in der gespeicherten Umgebungskarte zu identifizieren.

12. Roboter (100) nach Anspruch 9, wobei beim Auswählen der Zielgrenze der eine oder die mehreren Prozessoren (102) speziell konfiguriert sind für:
Optimieren der mindestens einen passierbaren Grenze, um mindestens eine optimierte passierbare Grenze zu erhalten;
Planen eines Navigationspfads zu der mindestens einen optimierten passierbaren Grenze gemäß einer relativen Positionsbeziehung zwischen dem Roboter (100) und der mindestens einen optimierten Grenze und den Umgebungsinformationen; und
Auswählen der Zielgrenze von der mindestens einen optimierten passierbaren Grenze gemäß dem Navigationspfad zu der mindestens einen optimierten passierbaren Grenze.

13. Roboter (100) nach Anspruch 9, wobei beim Auswählen der Zielgrenze der eine oder die mehreren Prozessoren (102) speziell konfiguriert sind für:
Optimieren der mindestens einen passierbaren Grenze, um mindestens eine optimierte passierbare Grenze zu erhalten; und
Auswählen der Zielgrenze aus der mindestens einen optimierten passierbaren Grenze gemäß einer Größe jeder optimierten passierbaren Grenze und einem Abstand zwischen jeder optimierten passierbaren Grenze und der aktuellen Position des Roboters (100).

14. Roboter (100) nach Anspruch 9, wobei, wenn die zweite Position gemäß der Zielgrenze bestimmt wird, der eine oder die mehreren Prozessoren (102) speziell für Folgendes vorgesehen sind:
Auswählen einer Position von der Zielgrenze als die zweite Position; oder
Auswählen einer Position aus einer Umgebungsregion außerhalb der Zielgrenze als die zweite Position.

15. Roboter (100) nach einem der Ansprüche 9 bis 15, wobei der eine oder die mehreren Prozessoren (102) ferner konfiguriert sind zum:
Während des Prozesses des Steuerns des Roboters (100), um sich in die zweite Position zu bewegen, Überwachen, ob eine neue passierbare Grenze um die aktuelle Position des Roboters (100) erscheint; und
Wenn die neue passierbare Grenze erscheint und eine Zielgrenzenbedingung erfüllt, Verwenden der neuen passierbaren Grenze als eine neue Zielgrenze und erneutes Bestimmen der zweiten Position gemäß der neuen Zielgrenze.

16. Roboter (100) nach einem der Ansprüche 9 bis 15, wobei der eine oder die mehreren Prozessoren (102) ferner für Folgendes vorgesehen sind:
Während des Prozesses der Steuerung des Roboters (100), um sich zu der zweiten Position zu bewegen, Überwachen eines bestehenden Zustands der Zielgrenze; und
Wenn die Zielgrenze verschwindet, Auswählen einer neuen Zielgrenze aus einer passierbaren Grenze um die aktuelle Position des Roboters (100) und erneutes Bestimmen der zweiten Position entsprechend der neuen Zielgrenze.

17. Computerlesbares Speichermedium, das Computeranweisungen speichert, wenn die Computeranweisungen durch einen oder mehrere Prozessoren (102) ausgeführt werden, was den einen oder die mehreren Prozessoren (102) veranlasst, die folgenden Vorgänge durchzuführen:
Erfassen von Umgebungsinformationen einer aktuellen Position;
Vergleichen der Umgebungsinformationen der aktuellen Position mit der in dem Roboter (100) gespeicherten Umgebungskarte, um ein Vergleichsergebnis zu erhalten;
Wenn das Vergleichsergebnis eine eingestellte Vergleichsanforderung nicht erfüllt, Bestimmen mindestens einer befahrbaren Grenze um die aktuelle Position herum auf der Grundlage der Umgebungsinformationen der aktuellen Position; und Auswählen einer Zielgrenze aus der mindestens einen befahrbaren Grenze und Bestimmen einer zweiten Position gemäß der Zielgrenze; wobei die befahrbare Grenze eine Grenze ist, die frei von Hindernisblockierung ist;
Steuerung des Roboters (100) zur Bewegung von der aktuellen Position zur zweiten Position während eines Lokalisierungsprozesses;
Erfassen von Umgebungsinformationen einer Umgebung, in der sich der Roboter (100) während der Bewegung bewegt; und
Vergleichen der Umgebungsinformationen mit einer gespeicherten Umgebungskarte, um eine Position des Roboters (100) in der gespeicherten Umgebungskarte zu identifizieren, wobei die Position eine Position und Ausrichtung des Roboters (100) umfasst.

## Revendications

1. Un procédé de localisation d'un robot (100), comprenant:
l'acquisition, par le robot (100), des informations d'environnement d'une position actuelle ;
la comparaison, par le robot (100), des informations d'environnement d'une position actuelle avec la carte d'environnement stockée dans le robot (100) pour obtenir un résultat de comparaison ;
lorsque le résultat de comparaison ne satisfait pas à une exigence de comparaison définie, la détermination, par le robot (100), d'au moins une limite franchissable autour de la position actuelle sur la base des informations d'environnement de la position actuelle ; et la sélection d'une limite cible parmi la ou les limites franchissables, et la détermination d'une seconde position en fonction de la limite cible ; la limite franchissable étant une limite exempte de blocage par un obstacle ;
le déplacement (201) du robot (100) de la position actuelle vers la seconde position pendant un processus de localisation ;
l'acquisition (202) des informations d'environnement d'un environnement dans lequel le robot (100) se déplace pendant le mouvement ; et
la comparaison (203) des informations d'environnement avec une carte d'environnement stockée dans le robot (100) pour identifier une pose du robot (100) dans la carte d'environnement stockée, dans laquelle la pose comprent une position et une orientation du robot (100).

2. Le procédé selon la revendication 1, dans lequel le déplacement (201) du robot (100) de la position actuelle vers la seconde position comprend en outre:
la sélection d'une position différente de la position actuelle en tant que seconde position en fonction des informations d'environnement de la position actuelle.

3. Le procédé selon la revendication 2, dans lequel le déplacement (201) du robot (100) de la position actuelle vers la seconde position comprend:
la planification, par le robot (100), d'une piste de navigation vers la seconde position en fonction des informations d'environnement de la position actuelle ; et
le déplacement vers la seconde position le long de la piste de navigation vers la seconde position ;
la comparaison (203) des informations d'environnement pendant le déplacement avec la carte d'environnement stockée dans le robot (100) pour identifier la pose du robot (100) dans la carte d'environnement stockée comprend:
pendant le processus de déplacement vers la seconde position le long de la piste de navigation vers la seconde position, la comparaison, au moins une fois, des informations d'environnement pendant le déplacement avec la carte d'environnement stockée dans le robot (100) pour identifier la pose du robot (100) dans la carte d'environnement stockée.

4. Le procédé selon la revendication 1, dans lequel la sélection de la limite cible parmi la ou les limites franchissables comprend:
l'optimisation de la ou des limites franchissables pour obtenir au moins une limite franchissable optimisée ;
la planification d'une piste de navigation vers la ou les limites franchissables optimisées en fonction d'une relation de position relative entre le robot (100) et la ou les limites optimisées et les informations d'environnement; et
la sélection de la limite cible parmi la ou les limites franchissables optimisées en fonction de la piste de navigation vers la ou les limites franchissables optimisées.

5. Le procédé selon la revendication 1, dans lequel la sélection de la limite cible parmi la ou les limites franchissables comprend:
l'optimisation de la ou des limites franchissables pour obtenir au moins une limite franchissable optimisée ; et
la sélection de la limite cible parmi la ou les limites franchissables optimisées en fonction des dimensions de chaque limite franchissable optimisée et d'une distance entre chaque limite franchissable optimisée et la position actuelle du robot (100).

6. Le procédé selon la revendication 1, dans lequel la détermination de la seconde position en fonction de la limite cible comprend:
la sélection d'une position à partir de la limite cible en tant que seconde position ; ou
la sélection d'une position à partir d'une région d'environnement à l'extérieur de la limite cible en tant que seconde position.

7. Le procédé selon l'une quelconque des revendications 1 à 6, comprenant en outre :
pendant le déplacement du robot (100) vers la seconde position, la surveillance de l'apparition ou non d'une nouvelle limite franchissable autour de la position actuelle ; et
lorsque la nouvelle limite franchissable apparaît et satisfait une condition de limite cible, l'utilisation de la nouvelle limite franchissable en tant que nouvelle limite cible, et la redétermination de la seconde position en fonction de la nouvelle limite cible.

8. Le procédé selon l'une quelconque des revendications 1 à 6, comprenant en outre :
pendant le déplacement du robot (100) vers la seconde position, la surveillance d'un état existant de la limite cible ; et
lorsque la limite cible disparaît, la sélection d'une nouvelle limite cible à partir d'une limite franchissable autour de la position actuelle, et la redétermination de la seconde position en fonction de la nouvelle limite cible.

9. Un robot (100), comprenant : une machine de base (101), dans laquelle la machine de base (101) est dotée d'un ou plusieurs capteurs (104), d'un ou plusieurs processeurs (102), et d'une ou plusieurs mémoires (103) stockant des instructions informatiques ;
la ou les mémoires (103) sont configurées pour stocker des instructions informatiques et une carte d'environnement ;
le ou les processors (102) sont configurés pour exécuter les instructions informatiques pour :
l'acquisition des informations d'environnement d'une position actuelle ;
la comparaison des informations d'environnement de la position actuelle avec la carte d'environnement stockée dans le robot (100) pour obtenir un résultat de comparaison ;
lorsque le résultat de comparaison ne satisfait pas à une exigence de comparaison définie, la détermination d'au moins une limite franchissable autour de la position actuelle sur la base des informations d'environnement de la position actuelle du robot (100) ; et la sélection d'une limite cible parmi la ou les limites franchissables, et la détermination d'une seconde position en fonction de la limite cible ; la limite franchissable étant une limite exempte de blocage par un obstacle ;
le pilotage du robot (100) pour initier son déplacement de la position actuelle vers la seconde position pendant un processus de localisation ;
l'acquisition des informations d'environnement d'un environnement dans lequel le robot (100) se déplace pendant le mouvement par le ou les capteurs (104) ; et
la comparaison des informations d'environnement avec la carte d'environnement stockée dans la ou les mémoires (103) pour identifier une pose du robot (100) dans la carte d'environnement stockée, dans laquelle ladite pose comprent une position et une orientation du robot (100).

10. Le robot (100) selon la revendication 9, dans lequel le pilotage du robot (100) pour initier son déplacement de la position actuelle vers la seconde position est précédé de ce que le ou les processeurs (102) réalisent en outre :
la sélection d'une position différente de la position actuelle en tant que seconde position en fonction des informations d'environnement de la position actuelle.

11. Le robot (100) selon la revendication 10, dans lequel, lors du pilotage du robot (100) pour initier son déplacement vers la seconde position, le ou les processeurs (102) sont spécifiquement destinés à :
planifier une piste de navigation vers la seconde position en fonction des informations d'environnement de la position actuelle du robot (100) ; et
piloter le robot (100) pour initier son déplacement vers la seconde position le long de la piste de navigation vers la seconde position ;
lors de la localisation de la pose du robot (100) dans la seconde carte d'environnement, le ou les processeurs (102) sont spécifiquement configurés pour :
pendant le processus du pilotage du robot (100), initier son déplacement vers la seconde position le long de la piste de navigation vers la seconde position, la comparaison, au moins une fois, des informations d'environnement pendant le déplacement avec la carte d'environnement stockée dans le robot (100) pour identifier la pose du robot (100) dans la carte d'environnement stockée.

12. Le robot (100) selon la revendication 9, dans lequel, lors de la sélection de la limite cible, le ou les processeurs (102) sont spécifiquement configurés pour :
optimiser la ou les limites franchissables afin d'obtenir au moins une limite franchissable optimisée ;
planifier une piste de navigation vers la ou les limites franchissables optimisées en fonction de la relation de position relative entre le robot (100) et la ou les limites optimisées et les informations d'environnement; et
sélectionner la limite cible parmi la ou les limites franchissables optimisées en fonction de la piste de navigation vers la ou les limites franchissables optimisées.

13. Le robot (100) selon la revendication 9, dans lequel, lors de la sélection de la limite cible, le ou les processeurs (102) sont spécifiquement destinés à :
optimiser la ou les limites franchissables afin d'obtenir au moins une limite franchissable optimisée ; et
sélectionner la limite cible parmi la ou les limites franchissables optimisées en fonction des dimensions de chaque limite franchissable optimisée et d'une distance entre chaque limite franchissable optimisée et la position actuelle du robot (100).

14. Le robot (100) selon la revendication 9, dans lequel, lors de la détermination de la seconde position en fonction de la limite cible, le ou les processeurs (102) sont spécifiquement destinés à :
sélectionner une position à partir de la limite cible en tant que seconde position ; ou
sélectionner une position à partir d'une région d'environnement à l'extérieur de la limite cible en tant que seconde position.

15. Le robot (100) selon l'une quelconque des revendications 9 à 15, dans lequel le ou les processeurs (102) sont en outre configurés pour :
pendant le processus du pilotage du robot (100), initier son déplacement vers la seconde position, surveiller si une nouvelle limite franchissable apparaît autour de la position actuelle du robot (100) ; et
lorsque la nouvelle limite franchissable apparaît et satisfait une condition de limite cible, utiliser la nouvelle limite franchissable en tant que nouvelle limite cible, et redéterminer la seconde position en fonction de la nouvelle limite cible.

16. Le robot (100) selon l'une quelconque des revendications 9 à 15, dans lequel le ou les processeurs (102) sont en outre destinés à :
pendant le processus du pilotage du robot (100), initier son déplacement vers la seconde position, surveiller l'état existant de la limite cible ; et
lorsque la limite cible disparaît, sélectionner une nouvelle limite cible à partir d'une limite franchissable autour de la position actuelle du robot (100), et redéterminer la seconde position en fonction de la nouvelle limite cible.

17. Un support de stockage lisible par ordinateur, stockant des instructions informatiques, lorsque les instructions informatiques sont exécutées par le ou les processeurs (102), amenant le ou les processeurs (102) à effectuer les opérations suivantes :
l'acquisition des informations d'environnement d'une position actuelle ;
la comparaison des informations d'environnement de la position actuelle avec la carte d'environnement stockée dans un robot (100) pour obtenir un résultat de comparaison ;
lorsque le résultat de comparaison ne satisfait pas à une exigence de comparaison définie, la détermination d'au moins une limite franchissable autour de la position actuelle sur la base des informations d'environnement de la position actuelle ; et la sélection d'une limite cible parmi la ou les limites franchissables, et la détermination d'une seconde position en fonction de la limite cible ; la limite franchissable étant une limite exempte de blocage par un obstacle ;
le pilotage du robot (100) pour initier son déplacement d'une position actuelle vers la seconde position pendant un processus de localisation ;
l'acquisition des informations d'environnement d'un environnement dans lequel le robot (100) se déplace pendant le mouvement ; et
la comparaison des informations d'environnement avec une carte d'environnement stockée pour identifier une pose du robot (100) dans la carte d'environnement stockée, dans laquelle ladite pose comprent une position et une orientation du robot (100).
